# EUROPEAN PATENT SPECIFICATION

(11) **EP 2 361 148 B1**
(45) Date of publication and mention of the grant of the patent: **06.11.2013**
(21) Application number: 09771389.5
(22) Date of filing: 06.11.2009
(51) Int. Cl.: B01J 8/38, F22B 31/00, F23C 10/10

(54) **A CIRCULATING FLUIDIZED BED BOILER**
KESSEL MIT ZIRKULIERENDER WIRBELSCHICHT
CHAUDIÈRE À LIT FLUIDISÉ CIRCULANT

(30) Priority: 06.11.2008 FI 20086055
(43) Date of publication of application: 31.08.2011
(73) Proprietor: Foster Wheeler Energia Oy, 02130 Espoo (FI)
(72) Inventor: KAUPPINEN, Kari, FI-78250 Varkaus (FI); KINNUNEN, Pertti, FI-78200 Varkaus (FI)
(74) Representative: Salonen, Kauko Tuomas
(86) International application number: PCT/FI2009/050896
(87) International publication number: WO 2010/052372

(56) References cited:
- EP-A2- 1 612 479
- WO-A1-2004/091768
- WO-A2-2007/128883
- US-A- 4 813 479
- US-B1- 6 237 541

## Description

The present invention relates to a circulating fluidized bed boiler in accordance with the introductory part of the independent claim. The present invention thus relates to a circulating fluidized bed boiler, comprising a furnace for combusting carbonaceous fuel, at least one outlet channel connected to the upper portion of the furnace for removing flue gas and solid particles generating in the combustion of the fuel from the furnace, each outlet channel being provided with a particle separator attached with a flue gas channel for transferring flue gas cleaned of solid particles out of the boiler, and a return duct for transferring separated solid particles to the lower portion of the furnace, said return duct being provided with a gas seal, a heat exchange chamber, a lift channel and an overflow conduit, wherein solid particles exiting the gas seal are guided to the upper portion of the heat exchange chamber and from the lower portion of the heat exchange chamber through the lift channel to the furnace or directly from the upper portion of the heat exchange chamber through the overflow conduit to the furnace.

The circulating fluidized bed boiler of the present invention may preferably be a large natural circulation boiler or once through boiler, for example, for power generation or industrial steam production. As the size of the boiler increases, the relation of the wall surface area to the volume of the furnace usually becomes disadvantageous, which may cause problems, for example, in controlling the boiler, positioning of the different devices and conduits related to the furnace as well as feed and mixing of different materials. The present invention especially relates to solving problems related to large circulating fluidized bed boilers.

US Patent No. 7,240,639 discloses a circulating fluidized bed boiler, in which hot solid particles separated by a solids separator are guided from the gas seal of the return duct to the upper portion of the heat exchange chamber integrated with the lower portion of the furnace and further either from the lower portion of the heat exchange chamber to the furnace through a riser or directly from the upper portion of the heat exchange chamber to the furnace through a separate overflow conduit. The heat exchange chamber is a fluidized chamber, which means that there are means provided in the lower portion of the chamber, especially nozzles and inlet piping for fluidization gas, by means of which the bed of solid particles being formed in the chamber can be fluidized.

The heat exchange efficiency of a fluidized heat change chamber may be adjusted to a certain extent by changing the fluidizing velocity, in other words the flow velocity of the fluidizing gas introduced to the chamber. However, an overflow channel offers another, very efficient way of adjusting the heat exchange efficiency by changing the share of the solid particles removed from the heat exchange chamber as overflow.

The problem in the arrangement disclosed in US Patent No. 7,240,639 is that the return ducts for cooled and uncooled particles as well as the separate fuel feeding channels make the arrangement complicated and space consuming by the walls in the lower portion of the furnace. According to a preferred embodiment disclosed in US Patent No. 7,240,639, there are two separate lift channels connected to the heat exchange chamber, which improves the homogeneous distribution of the cooled solid particles and thus promotes efficient, low-emission combustion of fuels.

US Patent No. 5,682,828 discloses a so called divided gas seal which is formed to the return duct of the particle separator, in which gas seal the vertical return duct of the particle separator is connected to one end of a short fluidized horizontal duct, the other end of the duct connecting to the lower portion of an upflow leg. The upflow leg is a fluidized, at least mainly vertical channel, in which solid particles are transferred from the bottom of the channel to the upper portion thereof by means of a sufficiently intense fluidizing gas flow. According to US Patent No. 5,682,828 a crosswise duct is connected to the upper portion of the upflow channel, with an inclined downflow channel leading from both ends thereof directly to furnace. The problem with the solution disclosed in the patent is that the solid particles to be returned can, for example, due to partial clogging, be drifted to return asymmetrically in such a way that the mass flow of one branch is greater than that of the other branch.

US Patent No. 6,923,128 discloses a divided gas seal, which is similar to that of US Patent No. 5,682,828 except that the pipe connecting to the upper portion of the upflow channel is bent in the middle and with the branches thereof pointing downwards inclined and inclined towards the furnace. Furthermore, the upper end of the vertical portion connecting to the branches is connected with a vertical inlet conduit for fuel. A common problem with the return duct arrangements integrated with the gas seals is that it is not possible to arrange a heat exchange chamber comprising an overflow duct in connection therewith.

An object of the present invention is to provide a circulating fluidized bed boiler, in which the problems of the prior art discussed above are minimized.

A special object of the present invention is to provide a compact and efficient circulating fluidized bed boiler, having a heat exchanger chamber provided in the return duct of a particle separator, the heat exchange efficiency of which can be adjusted and from which the solid particles are evenly distributed throughout the furnace area in all conditions.

In order to solve the above-mentioned problems of the prior art, a circulating fluidized bed boiler is provided, the characteristic features of which are disclosed in the characterizing part of the independent claim. Thus, a characterizing feature of a circulating fluidized bed boiler in accordance with the present invention is that there is at least one downpipe arranged in connection with the lift channel, the downpipe being connected at its upper portion to flow connection with the upper portion of the lift channel and at its lower portion to flow connection with the lower portion of the furnace and the overflow conduit is in direct flow connection with the upper portion of the downpipe.

Downpipe refers to a mainly vertical or almost vertical pipe or channel, through the lower portion of which material flows directly to the lower portion of the furnace. The downpipe is preferably dimensioned in such a way that in normal operation, only at the end of the downpipe connecting to the furnace there is a short column of flowing material and from the majority of the channel, the material quickly falls through, whereby the channel is mainly almost empty.

Overflow conduit refers to an opening, short channel or other direct connection from the upper portion of the heat exchange chamber to the upper portion of the downpipe. The overflow conduit is arranged to join with the upper portion of the heat exchange chamber in such a way that when the surface of the fluidized bed in the heat exchanger is low enough, the solid particles being returned from the particle separator do not pass through the overflow conduit to the downpipe, but through the heat exchange channel from up downwards, through an opening or conduit in the lower portion of the heat exchange chamber to the lower portion of the lift channel and further through the upper portion of the lift channel to the downpipe. Thereby, the solid particles have to move in the proximity of the heat exchange surfaces of the heat exchange chamber, whereby they cool down when releasing heat to the heat exchange medium circulating on the heat exchange surfaces. Correspondingly, when the surface of the fluidized bed maintained in the heat exchange chamber is high enough, a portion of the solid particles being returned from the particle separator passes from the upper portion of the heat exchange chamber through the overflow conduit directly to the downpipe without cooling on the heat exchange surfaces of the heat exchange chamber.

In some cases, it is possible to have only one downpipe connected to the lift channel, but according to a most preferred embodiment of the present invention, there are two downpipes at the same level connecting to one lift channel, the upper portions of both being connected by an overflow conduit directly to the upper portion of the heat exchange chamber. The two downpipes are preferably arranged to different sides of the lift channel in such a way that the lift channel and the upper portions of the downpipes are successively in the direction of the closest wall of the furnace. In some cases it may be advantageous to connect more than two downpipes to one lift channel, whereby there is preferably an overflow conduit connecting to the upper portion of each downpipe. According to a preferred embodiment, the lift channel is connected with two downpipes, of which one is connected with an overflow conduit, but the other one is not.

In some preferred embodiments of the invention, one heat exchange chamber can be connected with two or more lift channels, each of which being possibly connected with one or more lift channels. According to a most preferred embodiment, the heat exchange chamber is connected with two lift channels, each channel being connected to one downpipe. Thereby, the lift channels are preferably located to the opposite sides of the heat exchange chamber in such a way that the furnace side portion of the heat exchange chamber, the lift channels and the upper portions of the downpipes connected thereto are adjacently positioned parallel to the closest furnace wall. By increasing the amount of the downpipes, it is possible to achieve a very homogeneous distribution of the particles returned to the furnace.

The arrangement in accordance with the present invention, in which one lift channel is connected with two downpipes differs from the arrangements disclosed in publications US 5,682,828 and US 6,923,128 especially in that the flow of solid particles being returned from the particle separator is not divided in the lift channel of the gas lock, but in the lift channel of the heat exchange chamber arranged downstream of the gas seal, and therefore it is possible to connect overflow conduits to the downpipes and the downpipes can act in different situations either as discharge channels for material cooled on the heat exchange surfaces or as overflow channels for uncooled material.

As cooled and uncooled solid particles in the arrangement in accordance with the present invention are returned to the furnace along the same downpipe, the arrangement is simple and surface area-saving for the walls of the lower portion of the furnace. When several downpipes are used, it is possible to distribute both the cooled and uncooled particles in the arrangement in accordance with the invention homogeneously to the furnace area.

When the heat exchange efficiency of the heat exchange chambers is adjusted, it is possible to preferably use such fluidizing velocities by which a portion of the solid particles arriving from the particle separator are drifted via the heat exchange surfaces through the heat exchange chamber and another portion of the solid particles are directly removed from the upper portion of the heat exchange chamber via overflow conduits to the downpipes. Thereby, the downpipes act simultaneously both as discharge channels for cooled material and overflow channels for uncooled material.

The combining of two material flows in the downpipe, as performed in the above disclosed adjustment method, preferably takes place without the flows disturbing each other, when the flow direction of both material flows in the connection point of the flows is downwards. Thus, the overflow conduit is preferably a short, downwards directing channel. Furthermore, the connection point of the lift channel and the downpipes preferably has to be, to a certain extent, at a lower level than the connection points of the overflow conduits and downpipes. The connection of the material flows is also facilitated by the fact that the particles rapidly fall down from the upper portion of the downpipes to the lower portion thereof and in normal operating conditions the downpipes are almost empty in the connection point of the material flows.

Another meaning of the overflow conduits in accordance with the invention is that they also offer an exit route to the lower portion of the furnace for the fluidizing air of the heat exchanged chamber, whereby there is no need to arrange a special exit to the furnace, or it can be smaller than a conventional one, or it is not necessary to adjust the pressure conditions of the return duct in such a way that the fluidizing air exits through the gas seal to the particle separator. Since there is a counter pressure prevailing in the lower portion of the furnace, the level of which depends on the combusting conditions of the furnace, the fluidizing air exits through the downpipes to the furnace, of course, only when the pressure level after the gas seal in the return duct has reached a sufficient level.

Another advantage resulting from the feature that, for example, when using two downpipes, an overflow conduit has been arranged to the upper portion of both downpipes, is that the fluidizing gases exiting through the overflow conduits are guided to both downpipes, and, thus, they help to a certain extent the directing of the solid particles being returned from the particle separator evenly to both downpipes. An even distribution of the particle flow to the downpipes and therealong to the whole furnace area as homogeneously as possible, facilitates the efficient burning of the fuel and enables the minimization of the emissions generating in the combustion.

The heat exchange chamber, the lift channel, and the upper portions of the downpipes preferably form an integral entity, in other words, the heat exchange chamber, the lift channel, and the upper portions of the downpipes are formed attached to each other in such a way that the adjacent parts have at least mainly common partition walls. According to a most preferred embodiment, there are two downpipes connected to a lift channel, and they are attached firmly to each other in such a way that the lift channel and the downpipes positioned on both sides thereof form an integrated structure, which is parallel to the closest wall of the furnace.

The heat exchange chamber, the lift channel and the downpipes may be manufactured as completely or partially uncooled, in other words plate-structured, and from the inside refractory lined structure. However, the heat exchange chamber, the lift channel and at least the upper portions of the downpipes are preferably made at least mainly as water tube construction, which is connected to the water or steam cycle of the boiler. The particle separator and the gas seal are also preferably of water tube constructions and made as integrated water tube construction with the heat exchange chamber, the lift channel and at least the upper portions of the downpipes.

According to a preferred embodiment of the invention, at least one downpipe is connected with an inlet for fuel. Preferably all inlets for fuel that are required on the furnace walls comprising particle separators are connected to the downpipes connecting to the return ducts of the particle separators and no separate inlet openings for fuel are necessary. In this way area of the walls is saved, as the total number of the inlet openings required on said walls decreases. Advantageously it is possible to arrange such a large number of downpipes comprising inlet for fuel that a sufficiently homogeneous distribution of fuel in the furnace is achieved.

Distribution and mixing of fuel in the furnace are also facilitated by introducing the fuel to the furnace mixed in an already relatively large solid particle flow. The fuel also dries and becomes warmer while mixing with hot solid particle flow, which expedites the ignition of the fuel and its burning in the furnace.

The downpipe preferably comprises a non-vertical portion for introducing the fuel, which is connected with a mainly vertical inlet for fuel. According to a preferred embodiment, there are two downpipes connected to the lift channel of the heat exchange chamber, which both comprise a non-vertical portion connected with a vertical inlet for fuel. Such a non-vertical portion may be in the upper portion of the downpipe, especially at the highest point of the downpipe, whereby the inlet for fuel is preferably connected to the ceiling of the front end of the downpipe. According to another preferred embodiment, the inlet for fuel is connected to the center portion of the downpipe, in other words to a portion of the downpipe, which is positioned at least to some extent lower than the highest point of the mainly almost vertical downpipe, which portion is less steeply sloping than its surroundings, in other words to a more non-vertical portion. The advantage in the arrangement is that the fuel is introduced to a portion of the downpipe, in which the solid particles being returned from the particle separator fall at a relatively high velocity towards the furnace, whereby the risk of a clogging being formed in the connecting point of the fuel inlet is very small.

The inlet for fuel connected to the downpipe is preferably at least mainly vertical or almost vertical drop leg. Such a drop leg generally comprises a blower, by means of which the flow of the fuel in the drop leg is ensured. According to the present invention, the fluidizing gas in the heat exchange chamber exits to the furnace at least partially through the downpipes, whereby also said fluidizing gas ensures the flow of the fuel to the furnace.

The present invention is discussed in more detail below with reference to the accompanying drawings, in which
- Fig. 1: schematically illustrates a circulating fluidized bed boiler in accordance with a preferred embodiment of the present invention;
- Fig. 2: schematically illustrates a vertical cross-section of a preferred arrangement of a lift channel and downpipes connected therewith;
- Fig. 3: schematically illustrates a vertical cross-section of a second preferred arrangement of a lift channel and downpipes connected therewith.
- Fig. 4: schematically illustrates a vertical cross-section of a preferred arrangement of a heat exchange chamber, a lift channel and downpipes connected there-with;
- Fig. 5: schematically illustrates a vertical cross-section of a second preferred arrangement of a heat exchange chamber, lift channels and downpipes connected therewith;
- Fig. 6: schematically illustrates a horizontal cross-section of other preferred arrangements of a heat exchange chamber, lift channels and downpipes connected therewith.

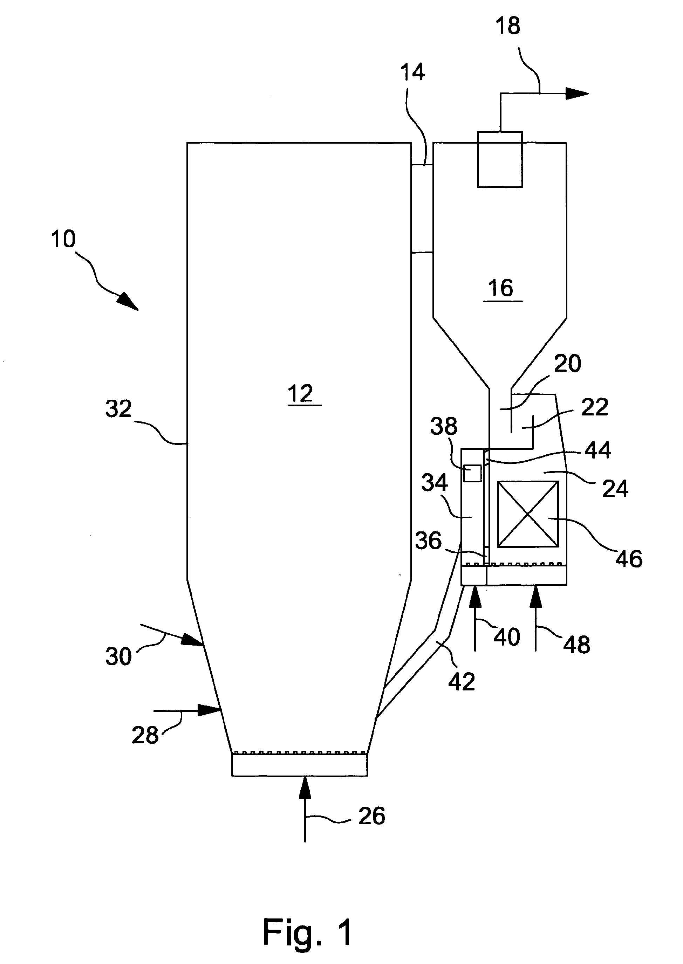

Fig. 1 illustrates a circulating fluidized bed boiler 10 in accordance with a preferred embodiment of the invention, having a furnace 12, an outlet channel 14 for flue gas and solid particles entrained therewith, a particle separator 16, a flue gas channel 18 for transferring cleaned flue gas out of the boiler and a return duct 20, along which at least a portion of the particles separated in the particle separator are returned to the lower portion of the furnace. A gas seal 22 for preventing the gas from flowing from the furnace through the return duct 20 to the particle separator 16 and a fluidized heat exchange chamber 24 are arranged in the return duct.

The furnace 12 is connected with conventional devices, such as a so called wind box and fluidizing nozzles, for introducing primary combustion gas 26 acting as fluidizing gas to the bottom of the furnace and means for introducing secondary combustion gas 28 to a certain extent higher level. The fluidizing gas and the combustion gases are usually air, but they can also comprise circulated flue gas and/or oxygen or a mixture thereof. The walls of the furnace may also comprise conventional conduits 30 for introducing fuel, bed material and sulphur-binding material to the furnace 12. Walls 32 of the furnace are usually made as water tube constructions in such a way that the water tube walls in the lower portion of the furnace are internally lined with refractory material.

There are usually different heat exchangers in the flue gas channel 18, such as superheaters, reheaters, an economizer and a preheater for combustion air. The flue gas channel can also comprise different cleaning devices for flue gas, for example, dust separators as well as devices for removing nitrogen oxides and sulfur dioxide. As these devices are not of importance for the present invention, they are not shown in Fig. 1.

The furnace 12 of a large circulating fluidized bed boiler has generally a rectangular horizontal cross-section, having two long sides and two short sides. In a large circulating fluidized bed boiler, there are usually two, three or four particle separators, adjacently located on one long side of the furnace, or four, six or eight particle separators, adjacently arranged on both long sides of the furnace. Thus, though Fig. 1 shows, as an example, only one particle separator 16, it is to be understood that it is possible to have more particle separators, and they can be arranged on both sides of the furnace.

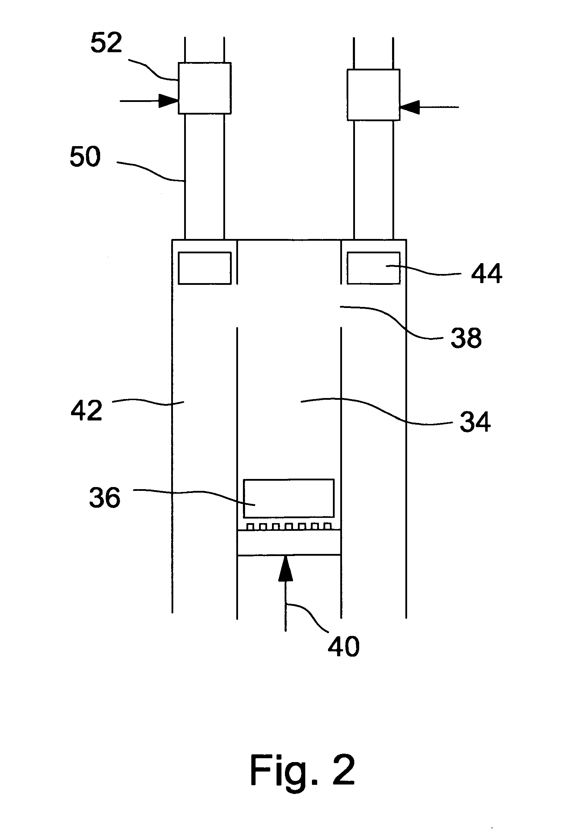

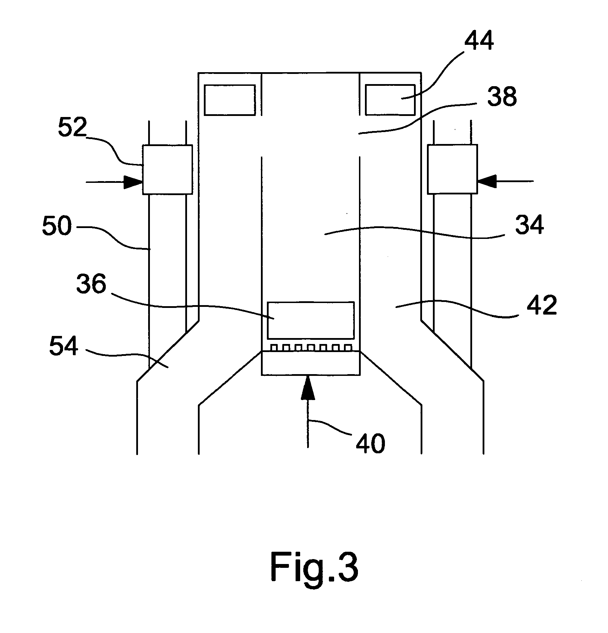

When using a circulating fluidized bed boiler 10, solid particles having a high temperature which are separated by a particle separator 16, are transferred from gas seal 22 to the upper surface of the fluidized bed of the heat exchange chamber 24. There is a lift channel 34 in connection with the heat exchange chamber, having a bottom opening 36 in the lower portion thereof, through which opening it is possible to transfer the solid particles from the lower portion of the heat exchange chamber to the lift channel. In the upper portion of the lift channel 34, there is a top opening 38, through which it is possible to transfer by means of fluidizing gas flow being fed through fluidizing means 40 of the lift channel solid particles to the upper portion of a downpipe 42 arranged in connection with the lift channel. As it can be seen in the vertical cross-sections of the lift channel 34 and downpipes 42 in Figs. 2 and 3, downpipes 42 can preferably be arranged to both sides of the lift channel 34. The solid particles are preferably guided from the lower portion of the downpipe 42 directly to lower portion of the furnace 12.

An overflow conduit 44 is arranged between the upper portion of the heat exchange chamber 24 and the upper portion of each downpipe 42, through which the fluidizing gas of the heat exchange chamber 24 is allowed to exit to downpipes and therethrough to the furnace. The overflow conduit 44 is preferably connected to the downpipe 42 at a level which is to a certain extent higher than the top opening 38 of the lift channel 34. The fluidizing gas exiting from the overflow conduit 44 assists in maintaining the downpipes 42 open. At the same time, the fluidizing gas of the heat exchange chamber exiting through each downpipe facilitates in distributing the solid material homogeneously to individual downpipes and also to the area of the whole furnace 12.

The heat exchange chamber 24 has heat exchange surfaces 46, for example, superheater surfaces of the boiler, by means of which it is possible to transfer heat from the hot solid particles separated by the particle separator to the heat exchange medium, for example, steam to be superheated. The heat exchange efficiency can be adjusted to a certain extent by changing the fluidizing velocity of the heat exchange chamber, in other words, the flow velocity of the fluidizing gas being introduced through fluidizing means 48 to flow through the heat exchange chamber. Another method of adjusting the heat exchange efficiency is to adjust the fluidizing velocity of the lift channel 34 in such a way that only a portion of the solid particles separate by the particle separator 16 exits from the heat exchange chamber through the lift channel. Thereby, the surface of the fluidized bed in the heat exchange chamber 24 rises in the upper portion of the chamber to the level of the overflow conduits 44 and solid particles start to exit also through overflow conduits. As can be seen in Figs. 2 and 3, overflow conduits 44 guide separated solid particles directly to the upper portion of the downpipes 42.

When the fluidizing velocity of the lift channel is sufficient, all separated hot solid particles exit from the bottom of the heat exchange chamber 24 through the lift channel 34. Thereby, as large an amount of hot particles as possible passes also in the vicinity of the heat exchange surfaces 46, and the heat exchange efficiency of the heat exchange chamber is maximal. The other extreme is to fluidize material in the lift channel 34 with such a low efficiency that all material exits through overflow, conduits 44, whereby the heat exchange efficiency of the heat exchange chamber 24 is at its minimum. A third alternative is to use such a fluidizing velocity in the lift channel 34, by which a portion of the material exits through the lift channel 34 and another portion through the overflow conduits 44. This way the heat exchange efficiency can be adjusted continuously and accurately.

An inlet for fuel 50, preferably a vertical or partially inclined drop leg, is connected to the ceiling of downpipes 42 in Fig. 2. The drop leg is preferably connected to an inlet for air 52, through which it is possible to introduce air or other gas to promote the flow of the fuel downwards. When the fuel enters the downpipe 42, it mixes with the flow of the solid particles to be returned. The solid particle flow which is warmer than the fuel, dries and preheats the fuel in such a way that having entered the furnace 12, it ignites and burns rapidly. At the same time, the gas exiting the overflow conduits 44 intensifies the flow of the fuel to the furnace.

Fig. 3 discloses another arrangement which differs from that disclosed in Fig. 2 in having the inlets for fuel 50 connected to a portion 54, which is arranged to the center portion of the downpipes 42, in other words to at least somewhat lower level than their highest point, which is less steeply sloping than the surrounding portions. The advantage in said arrangement is that the flow of solid material being returned from the heat exchange chamber and falling along the downpipe has at the inlet for fuel already reached a relatively high velocity, whereby it will efficiently draw the fuel falling from the inlet 50 with it.

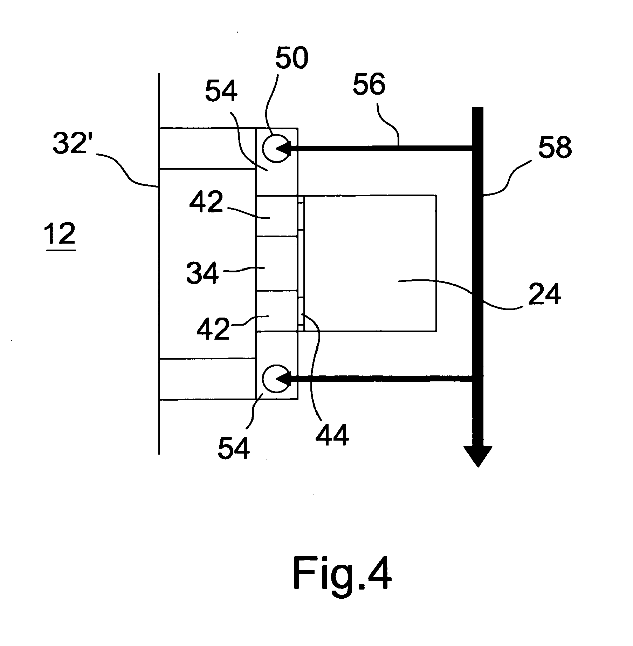

Fig. 4 discloses a schematic horizontal cross-sectional view of an arrangement of a heat exchange chamber 24 of a circulating fluidized bed boiler, a lift channel 34 connected thereto and downpipes 42 connected to the lift channel in accordance with the invention, corresponding to the arrangement of Fig. 3. As can be seen from Fig. 4, the lift channel 34 and the downpipes 42 are successively arranged parallel to the closest side wall 32' of the furnace 12. Thus, the heat exchange chamber 24, lift channel 34 and downpipes 42 form a compact entity, which can advantageously be connected to the fuel transfer system and can be arranged, when necessary, very close to the furnace.

In the arrangement in accordance with Fig. 4, non-vertical portions 54 in the center portion of the downpipes 42 are directed along the side wall 32' of the furnace 12, and distributing conveyors 56 transferring fuel to the inlets for fuel or to drop legs, such as robbing screws, bring fuel from a common conveyor 58, for example, a flight conveyor, preferably past the heat exchange chamber 24, perpendicularly to the side wall 32' of the furnace. Thereby, the common conveyor 58 bringing fuel to a number of distributing conveyors 56 can preferably be located behind the heat exchange chamber(s) as seen from the furnace. Thus, in the arrangement in accordance with the invention, it is not necessary to locate fuel conveyors between the heat exchange chamber(s) 24 and the furnace.

The furnace of the circulating fluidized bed boiler in accordance with the present invention, the particle separators and heat exchange chambers connected thereto and the devices and channels therebetween are typically all structures hung from the solid supporting structure of the boiler. Especially with large boilers, it is possible to make considerably savings by keeping the supporting structure as small as possible. Therefore, a compact arrangement of the heat exchange chamber and the channels connected thereto in accordance with the invention close to the furnace significantly saves in total construction costs of the whole power plaht.

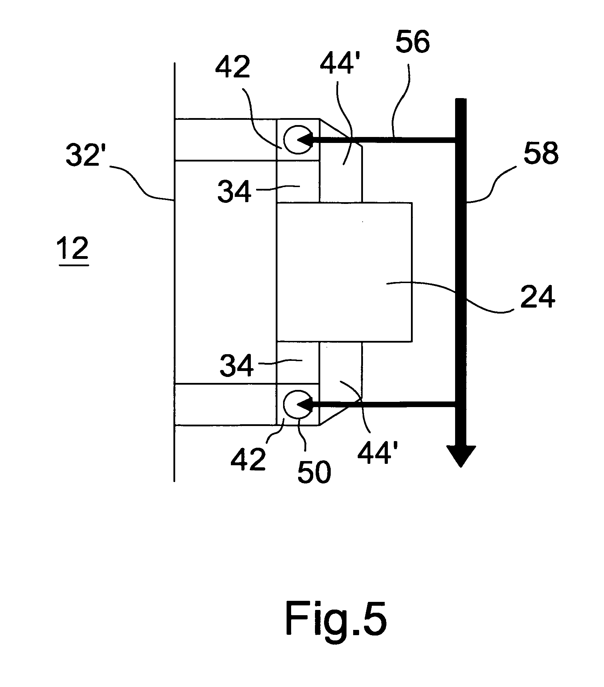

Fig. 5 discloses a schematic horizontal cross-sectional view of a second arrangement of a heat exchange chamber 24, a lift channel 34 connected thereto and downpipes 42 connected to the lift channel in a circulating fluidized bed boiler 10 in accordance with the invention. The arrangement of Fig. 5 differs from that of Fig. 4 in that there are two lift channels 34 connected to the heat exchange chamber 24, one on each side of the heat exchange chamber 24. The downpipes 42 connected to the lift channels are adjacent with the lift channels parallel to the to the closest side wall 32' of the furnace 12. Thus, in the arrangement illustrated in Fig. 5, the heat exchange chamber 24, lift channels 34 and the upper portions of the downpipes 42 are successively arranged parallel to the closest side wall 32' of the furnace 12.

The inlets for fuel in the arrangement disclosed in Fig. 5 are connected to the ceiling of the downpipes 42, in the similar way as in the arrangement of Fig. 2. Said arrangement of lift channels and downpipes can, however, be modified also in such a way that the inlets for fuel are connected to a less steeply sloping point in the center portion of the downpipes, as in Fig. 4. The arrangement of Fig. 5 is especially advantageous, as the heat exchange chamber 24, the lift channels 34 and the downpipes 42 there form an especially compact entity in a direction perpendicular to the closest wall 32' of the furnace, which can be arranged, if necessary especially close to the furnace 12. The disadvantage of the arrangement is that as the downpipes 42 are spaced apart from the heat exchange chamber 24, the overflow conduits leading from the upper portion of the heat exchange chamber 24 to the upper portion of the downpipes 42 cannot be mere openings, but they must be separate, short channels 44'.

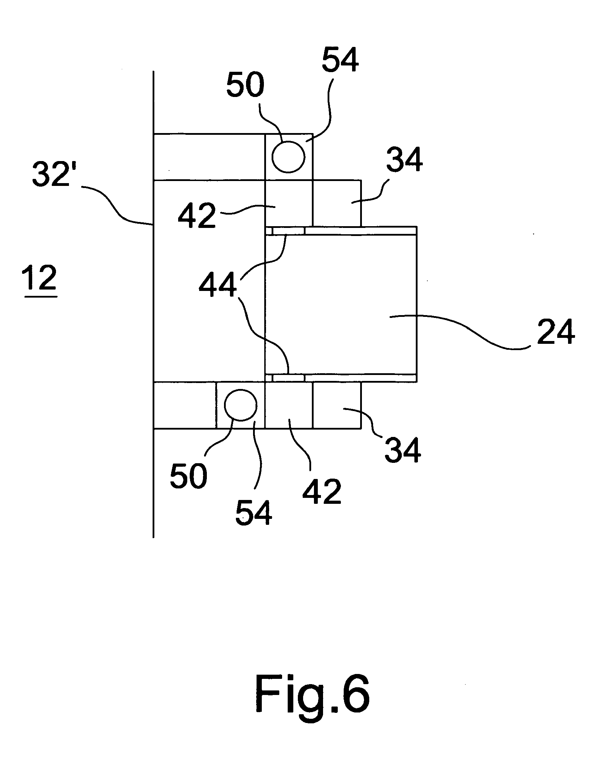

Fig. 6 discloses yet another way of locating a heat exchange chamber 24, two lift channels 34 and downpipes 42 connected thereto. In the arrangement in accordance with Fig. 6, the lift channels 34 and the downpipes 42 are arranged in connection with the walls of the heat exchange chamber 24 perpendicular to the closest side wall 32' of the furnace. Thus, the distance between the heat exchange chamber 24 and the furnace 12 can be kept short and the overflow conduit 44 is a mere opening in the wall between the heat exchange chamber 24 and the downpipe 42. The figure also illustrates two different ways of locating the inlet for fuel 50 to the portion 54 less steeply sloping than the surrounding downpipe 42. The upper portion of Fig. 6 discloses an arrangement in which the less steeply sloping portion 54 of the downpipe 42 is directed parallel to the side wall 32' of the furnace 12, whereby the distance of the heat exchange chamber 24 from the furnace 12 can be minimized. Correspondingly, the lower portion of Fig. 6 discloses an arrangement, in which the less steeply sloping portion 54 is directed towards the furnace 12, whereby the structure is to a certain extent simpler and narrower in the direction of the side wall 32' of the furnace.

The invention has been described above in connection with exemplary arrangements, but the invention comprises also various combinations or modifications of the disclosed embodiments. Especially the number and geometry of lift channels and downpipes may vary from what is disclosed in Figs. 1-6. Thus, it is obvious that the exemplary embodiments disclosed herein are not intended to limit the scope of the invention, but several other embodiments are also included in the invention, said embodiments being limited only by the appended claims and the definitions therein.

## Claims

1. A circulating fluidized bed boiler (10), comprising a furnace (12) for combusting carbonaceous fuel and at least one outlet channel (14) connected to the upper portion of the furnace for removing flue gas and solid particles generating in the combustion of the fuel from the furnace, each outlet channel being provided with a particle separator (16) attached with a flue gas channel (18) for transferring flue gas cleaned of solid particles out of the boiler and a return duct (20) for transferring separated solid particles to the lower portion of the furnace, said return duct (20) being provided with a gas seal (22), a heat exchange chamber (24), a lift channel (34) and an overflow conduit (44), wherein solid particles exiting the gas seal are guided to the upper portion of the heat exchange chamber (24) and from the lower portion of the heat exchange chamber through the lift channel (34) to the furnace or directly from the upper portion of the heat exchange chamber through the overflow conduit (44) to the furnace,
**characterized in that** at least one downpipe (42) is arranged in connection with the lift channel (34), the downpipe being connected at its upper portion to flow connection with the upper portion of the lift channel (34) and at its lower portion to flow connection with the lower portion of the furnace (12) and the overflow conduit (44) is in direct flow connection with the upper portion of the downpipe.

2. Circulating fluidized bed boiler according to claim 1, **characterized in that** a downpipe (42) has been arranged on two separate sides of the lift channel (34), said downpipes being provided with an overflow conduit (44) in such a way that the lift channel and the upper portions of the downpipes are successively in the direction of the closest wall (32') of the furnace (12).

3. Circulating fluidized bed boiler according to claim 1, **characterized in that** two opposite sides of the heat exchange chamber (24) are provided with a lift channel (34), said lift channels being connected with a downpipe (42) and said downpipes being connected with an overflow conduit (44') in such a way that the heat exchange chamber, the lift channels, and the upper portions of the downpipes are successively in the direction of the closest wall (32') of the furnace (12).

4. Circulating fluidized bed boiler according to claim 1, **characterized in that** a lift channel (34) and a downpipe (42) have been arranged in connection with two side walls of the heat exchange chamber (24), said side walls being perpendicular to the closest wall (32') of the furnace, and said sidewalls being provided with an overflow conduit (44).

5. Circulating fluidized bed boiler according to claim 1, **characterized in that** the heat exchange chamber (24), the lift channel or lift channels (34), the upper portions of the downpipes (42) and the overflow conduits (44) form an integral entity.

6. Circulating fluidized bed boiler according to claim 5, **characterized in that** the heat exchange chamber (24), the lift channel or lift channels (34), the upper portions of the downpipes (42) and the overflow conduits (44) are mainly made as water tube constructions.

7. Circulating fluidized bed boiler according to claim 1, **characterized in that** the overflow conduit (44) is connected to the downpipe (42) at a higher level than the lift channel (34).

8. Circulating fluidized bed boiler according to claim 1, **characterized in that** at least one downpipe (42) is provided with an inlet for fuel (50).

9. Circulating fluidized bed boiler according to claim 8, **characterized in that** the inlet for fuel (50) is connected to a non-vertical portion (54) of the downpipe (42).

10. Circulating fluidized bed boiler according to claim 9, **characterized in that** the non-vertical portion (54) forms a ceiling of the downpipe.

11. Circulating fluidized bed boiler according to claim 9, **characterized in that** the non-vertical portion (54) forms an inclined portion below the highest point of the downpipe.

12. Circulating fluidized bed boiler according to claim 8, **characterized in that** the inlet for fuel (50) is a drop leg.

13. Circulating fluidized bed boiler according to claim 8, **characterized in that** the inlet for fuel (50) is attached to a distributing conveyor (56) transferring fuel, said conveyor being directed alongside the heat exchange chamber (24) directly towards the furnace (12).

14. Circulating fluidized bed boiler according to claim 13, **characterized in that** the distributing conveyor (56) is in connection with a common conveyor (58) transferring fuel, said common conveyor being arranged aligned with the closest wall (32') of the furnace (12), behind the heat exchange chamber (24) as viewed from the furnace.

## Patentansprüche

1. Zirkulierender Wirbelschichtkessel (10), umfassend eine Feuerung (12) zur Verbrennung von kohlenstoffhaltigem Brennstoff und zumindest einen Auslasskanal (14), der mit dem oberen Abschnitt der Feuerung verbunden ist, zur Entfernung von Rauchgas und Feststoffpartikeln, die bei der Verbrennung von Brennstoff in der Feuerung anfallen, wobei jeder Auslasskanal mit einem an einem Rauchgaskanal (18) angebrachten Partikelabscheider (16) versehen ist zur Beförderung von von Feststoffpartikeln gereinigtem Rauchgas aus dem Kessel heraus und einen Rückführkanal (20) zur Weiterleitung von abgeschiedenen Festoffpartikeln zum unteren Abschnitt der Feuerung, welcher Rückführkanal (20) mit einem Gasverschluss (22), einer Wärmetauschkammer (24), einem Hebekanal (34) und einem Überlaufkanal (44) ausgestattet ist, wo den Gasverschluss verlassende Feststoffpartikel in den oberen Abschnitt der Wärmetauschkammer (24) geleitet werden und aus dem unteren Abschnitt der Wärmetauschkammer durch den Hebekanal (34) in die Feuerung oder direkt aus dem oberen Abschnitt der Wärmetauschkammer durch den Überlaufkanal (44) in die Feuerung geleitet werden,
**dadurch gekennzeichnet, dass** zumindest ein Fallrohr (42) in Verbindung mit dem Hebekanal (34) angeordnet ist, wobei das Fallrohr an seinem oberen Abschnitt in Strömungsverbindung mit dem oberen Abschnitt des Hebekanals (34) und an seinem unteren Abschnitt in Strömungsverbindung mit dem unteren Abschnitt der Feuerung (12) verbunden ist und der Überlaufkanal (44) in direkter Strömungsverbindung mit dem oberen Abschnitt des Fallrohrs steht.

2. Zirkulierender Wirbelschichtkessel nach Patentanspruch 1, **dadurch gekennzeichnet, dass** ein Fallrohr (42) auf zwei getrennten Seiten des Hebekanals (34) angeordnet ist, welche Fallrohre mit einem Überlaufkanal (44) auf solche Weise versehen sind, dass der Hebekanal und die oberen Abschnitte der Fallrohre sich aufeinanderfolgend in Richtung der nächsten Wand (32') der Feuerung (12) befinden.

3. Zirkulierender Wirbelschichtkessel nach Patentanspruch 1, **dadurch gekennzeichnet, dass** zwei sich gegenüber liegende Seiten der Wärmetauschkammer (24) mit einem Hebekanal (34) versehen sind, welche Hebekanäle mit einem Fallrohr (42) verbunden sind und die Fallrohre mit einem Überlaufkanal (44') auf solche Weise verbunden sind, dass die Wärmetauschkammer, die Hebekanäle und die oberen Abschnitte der Fallrohre sich aufeinanderfolgend in Richtung der nächsten Wand (32') der Feuerung (12) befinden.

4. Zirkulierender Wirbelschichtkessel nach Patentanspruch 1, **dadurch gekennzeichnet, dass** ein Hebekanal (34) und ein Fallrohr in Verbindung mit zwei Seitenwänden der Wärmetauschkammer (24) angeordnet sind, welche Seitenwände senkrecht zur nächsten Wand (32') der Feuerung stehen und die Seitenwände mit einem Überlaufkanal (44) versehen sind.

5. Zirkulierender Wirbelschichtkessel nach Patentanspruch 1, **dadurch gekennzeichnet, dass** die Wärmetauschkammer (24), der Hebekanal oder die Hebekanäle (34), die oberen Abschnitte der Fallrohre (42) und die Überlaufkanäle (44) eine integrale Gesamtheit bilden.

6. Zirkulierender Wirbelschichtkessel nach Patentanspruch 5, **dadurch gekennzeichnet, dass** die Wärmetauschkammer (24), der Hebekanal oder die Hebekanäle (34), die oberen Abschnitte der Fallrohre (42) und die Überlaufkanäle (44) hauptsächlich als Wasserrohrkonstruktionen ausgeführt sind.

7. Zirkulierender Wirbelschichtkessel nach Patentanspruch 1, **dadurch gekennzeichnet, dass** der Überlaufkanal (44) mit dem Fallrohr (42) auf einem höheren Niveau als der Hebekanal (34) verbunden ist.

8. Zirkulierender Wirbelschichtkessel nach Patentanspruch 1, **dadurch gekennzeichnet, dass** zumindest ein Fallrohr (42) mit einem Einlass für Brennstoff (50) versehen ist.

9. Zirkulierender Wirbelschichtkessel nach Patentanspruch 8, **dadurch gekennzeichnet, dass** der Einlass für Brennstoff (50) mit einem nicht vertikalen Abschnitt (54) des Fallrohrs (42) verbunden ist.

10. Zirkulierender Wirbelschichtkessel nach Patentanspruch 9, **dadurch gekennzeichnet, dass** der nicht vertikale Abschnitt (54) eine Decke des Fallrohrs bildet.

11. Zirkulierender Wirbelschichtkessel nach Patentanspruch 9, **dadurch gekennzeichnet, dass** der nicht vertikale Abschnitt (54) einen geneigten Abschnitt unterhalb des höchsten Punkts des Fallrohrs bildet.

12. Zirkulierender Wirbelschichtkessel nach Patentanspruch 8, **dadurch gekennzeichnet, dass** der Einlass für Brennstoff (50) ein Fallrohr ist.

13. Zirkulierender Wirbelschichtkessel nach Patentanspruch 8, **dadurch gekennzeichnet, dass** der Einlass für Brennstoff (50) an einem Brennstoff transferierenden Verteilerförderer (56) befestigt ist, welcher Förderer längs der Wärmetauschkammer (24) direkt zur Feuerung (12) hin ausgerichtet ist.

14. Zirkulierender Wirbelschichtkessel nach Patentanspruch 13, **dadurch gekennzeichnet, dass** der Verteilerförderer (56) in Verbindung mit einem gemeinsamen Brennstoff transferierenden Förderer (56) steht, welcher gemeinsame Förderer mit der nächsten Wand (32') der Feuerung (12) hinter der Wärmetauschkammer (24) von der Feuerung aus gesehen fluchtend ausgerichtet ist.

## Revendications

1. Chaudière à lit fluidisé circulant (10), comportant un four (12) pour faire brûler un combustible carboné et au moins un conduit de sortie (14) raccordé à la partie supérieure du four en vue d'évacuer les gaz de fumée et les particules solides générées par la combustion du combustible à partir du four, chaque conduit de sortie étant doté d'un séparateur de particules (16) relié à un conduit de gaz de fumée (18) pour transférer les gaz de fumée débarrassés des particules solides hors de la chaudière et un conduit de retour (20) pour transférer les particules solides séparées vers la partie inférieure du four, ledit conduit de retour (20) étant pourvu d'un joint étanche au gaz (22) d'une chambre d'échange de chaleur (24), d'un conduit de remontée (34) et d'un conduit de débordement (44), dans laquelle les particules solides sortant du joint étanche au gaz sont dirigées vers la partie supérieure de la chambre d'échange de chaleur (24) et à partir de la partie inférieure de la chambre d'échange de chaleur, par le conduit de remontée (34), vers le four ou à partir directement de la partie supérieure de la chambre d'échange de chaleur , par le conduit de débordement (44), vers le four, **caractérisée en ce que**, au moins un tuyau de descente (42) est agencé en liaison avec le conduit de remontée (34), le tuyau de descente étant raccordé au niveau de sa partie supérieure à une liaison d'écoulement avec la partie supérieure du conduit de remontée (34) et au niveau de sa partie inférieure à une liaison d'écoulement avec la partie inférieure du four (12) et le conduit de débordement (44) se trouve en liaison directe d'écoulement avec la partie supérieure du tuyau de descente.

2. Chaudière à lit fluidisé circulant selon la revendication 1, **caractérisée en ce qu'**un tuyau de descente (42) a été agencé sur deux côtés séparés du conduit de remontée (34), lesdits tuyaux de descente étant dotés d'un conduit de débordement (44) d'une manière telle que le conduit de remontée et les parties supérieures des tuyaux de descente se trouvent, de façon successive, dans la direction de la paroi la plus proche (32') du four (12).

3. Chaudière à lit fluidisé circulant selon la revendication 1, **caractérisée en ce que** les deux côtés opposés de la chambre d'échange de chaleur (24) sont dotés d'un conduit de remontée (34), lesdits conduits de remontée étant raccordés à un tuyau de descente (42) et lesdits tuyaux de descente étant raccordés à un conduit de débordement (44') de telle sorte que la chambre d'échange de chaleur, les conduits de remontée et les parties supérieures des tuyaux de descente se trouvent, de façon successive, dans la direction de la paroi la plus proche (32') du four (12).

4. Chaudière à lit fluidisé circulant selon la revendication 1, **caractérisée en ce qu'**un conduit de remontée (34) et un tuyau de descente (42) ont été agencés en liaison avec deux parois latérales de la chambre d'échange de chaleur (24), lesdites parois latérales étant perpendiculaires à la paroi la plus proche (32') du four, et lesdites parois latérales étant pourvues d'un conduit de débordement (44).

5. Chaudière à lit fluidisé circulant selon la revendication 1, **caractérisée en ce que** la chambre d'échange de chaleur (24), le conduit de remontée ou les conduits de remontée (34), les parties supérieures des tuyaux de descente (42) et les conduits de débordement (44) forment une entité solidaire.

6. Chaudière à lit fluidisé circulant selon la revendication 5, **caractérisée en ce que** la chambre d'échange de chaleur (24), le conduit de remontée ou les conduits de remontée (34), les parties supérieures des tuyaux de descente (42) et les conduits de débordement (44) sont principalement fabriqués comme des constructions à tubes d'eau.

7. Chaudière à lit fluidisé circulant selon la revendication 1, **caractérisée en ce que** le conduit de débordement (44) est raccordé au tuyau de descente (42) à un niveau plus élevé que celui du conduit de remontée (34).

8. Chaudière à lit fluidisé circulant selon la revendication 1, **caractérisée en ce qu'**au moins un tuyau de descente (42) est prévu avec un canal d'entrée pour le combustible (50).

9. Chaudière à lit fluidisé circulant selon la revendication 8, **caractérisée en ce que** le canal d'entrée destiné au combustible (50) est raccordé à une partie non verticale (54) du tuyau de descente (42).

10. Chaudière à lit fluidisé circulant selon la revendication 9, **caractérisée en ce que** la partie non verticale (54) constitue un plafond du tuyau de descente.

11. Chaudière à lit fluidisé circulant selon la revendication 9, **caractérisée en ce que** la partie non verticale (54) forme une partie inclinée au-dessous du point le plus haut du tuyau de descente.

12. Chaudière à lit fluidisé circulant selon la revendication 8, **caractérisée en ce que** le canal d'entrée destiné au combustible (50) est une colonne d'aspiration.

13. Chaudière à lit fluidisé circulant selon la revendication 8, **caractérisée en ce que** le canal d'entrée destiné au combustible (50) est fixé à un convoyeur de distribution (56) qui transporte le combustible, le convoyeur étant dirigé le long du côté de la chambre d'échange de chaleur (24) directement vers le four (12).

14. Chaudière à lit fluidisé circulant selon la revendication 13, **caractérisée en ce que** le convoyeur de distribution (56) est en liaison avec un convoyeur commun (58) de transport de combustible, ledit convoyeur commun étant disposé en alignement avec la paroi la plus proche (32') du four (12), derrière la chambre d'échange de chaleur (24) lorsque vue à partir du four.
